# EUROPÄISCHE PATENTSCHRIFT

(11) **EP 1 853 465 B1**
(45) Veröffentlichungstag und Bekanntmachung des Hinweises auf die Patenterteilung: **11.04.2012**
(21) Anmeldenummer: 06708099.4
(22) Anmeldetag: 08.02.2006
(51) Int. Cl.: B60R 16/02

(54) **VERFAHREN UND VORRICHTUNG ZUR SPRACHSTEUERUNG EINES GERÄTES ODER EINES SYSTEMS IN EINEM KRAFTFAHRZEUG**
METHOD AND DEVICE FOR VOICE CONTROLLING A DEVICE OR SYSTEM IN A MOTOR VEHICLE
PROCEDE ET DISPOSITIF DE COMMANDE VOCALE D'UN APPAREIL OU D'UN SYSTEME DANS UN VEHICULE AUTOMOBILE

(30) Priorität: 17.02.2005 DE 102005007317
(43) Veröffentlichungstag der Anmeldung: 14.11.2007
(73) Patentinhaber: ROBERT BOSCH GMBH, 70442 Stuttgart (DE)
(72) Erfinder: KORTHAUER, Andreas, 70499 Stuttgart (DE); PLACKE, Lars, 30163 Hannover (DE)
(86) Internationale Anmeldenummer: PCT/EP2006/050752
(87) Internationale Veröffentlichungsnummer: WO 2006/087280

(56) Entgegenhaltungen:
- EP-A- 1 123 842
- EP-A- 1 555 652
- DE-A1- 10 037 023
- US-B1- 6 411 934

## Beschreibung

### Stand der Technik

Die vorliegende Erfindung betrifft ein Verfahren zur Sprachsteuerung eines Gerätes oder eines Systems in einem Kraftfahrzeug, wobei das Gerät oder das System sowohl durch Spracheingaben als auch durch nicht-sprachliche Eingaben, insbesondere durch die Betätigung von Schaltern und/oder Knöpfen und/oder eines Touch-Screens, bedient werden kann. Derartige Geräte oder Systeme können beispielsweise Radiogeräte, Autotelefonanlagen oder Fahrer-Assistentensysteme, etwa ein Navigationssystem sein.

Vorrichtungen und Verfahren zur Sprachsteuerung von Geräten oder Systemen sind beispielsweise aus der Druckschrift DE 100 08 226 C2 bekannt. Sie werden in Kraftfahrzeugen insbesondere im Bereich von Infotainment (Autoradio, Wiedergabegeräte, Hifi-Anlagen) und/oder Kommunikationsmitteln (Mobiltelefon, Ortungsvorrichtung und Navigation) eingesetzt. Dabei werden über mindestens ein Mikrophon Spracheingaben des Benutzers aufgenommen, in elektrische Signale umgewandelt und als Ausführungsbefehl interpretiert.

Ein gattungstildendes Dokument ist die DE-A-10037023.

Allgemein kommen im Kraftfahrzeug zunehmend mehr Interaktionsstrategien zum Einsatz, bei denen verschiedene Sinneskanäle und verschiedene Kodierungen, beispielsweise Töne, Sprache, Grafiken und/oder Text eingesetzt werden und die als multimodale Interaktionsstrategien bezeichnet werden. Dabei wird neben visuellen Informationsdarstellungen und haptischen Eingabemöglichkeiten mittels Knöpfen oder Touch-Screen immer häufiger zusätzlich auch die Möglichkeit einer Sprachbedienung sowohl für Eingaben vom Benutzer als auch für Ausgaben an den Benutzer eingesetzt.

Dabei stellt die Sprachbedienung insbesondere in Kraftfahrzeugen nicht nur eine sehr einfache und bequeme, sondern vor allem auch eine sehr sichere Art der Bedienung dar, da sie nicht mit anderen manuell auszuführenden Bedienfunktionen oder Regelaufgaben, beispielsweise mit dem Spurhalten mit dem Lenkrad interferiert. Deshalb ist in der Regel die Spurhaltung während einer sprachlich vorgenommenen Bedienung besser als bei einer manuell ausgeführten Bedienung eines Gerätes oder Systems, was einen wesentlichen Vorteil der Sprachbedienung darstellt. Durch die deutlich geringere Ablenkung des Fahrers von der eigentlichen Fahraufgabe wird nicht nur die Verkehrssicherheit für die Insassen des Kraftfahrzeugs, sondern letztendlich auch für andere Verkehrsteilnehmer erhöht.

Allerdings ist es bei derartigen Systemen mit der zusätzlichen Option einer Sprachbedienung stets möglich, die sprachbedienbaren Funktionen auch ohne Sprachbedienung auf herkömmlichem Weg zu nutzen. Die Sprachbedienungen sind somit immer benutzergetrieben, was bedeutet, dass der Benutzer selber entscheidet, ob und wann er auf die Möglichkeit einer Sprachbedienung zurückgreift. Hierbei können beispielsweise bisherige Gewohnheiten des Benutzers bzw. Fahrers eine große Rolle spielen. Dadurch ist nicht immer gewährleistet, dass der Fahrer die sichere Sprachbedienung nutzt.

Die der vorliegenden Erfindung zugrunde liegende Problematik besteht allgemein darin, die Vorteile einer Sprachbedienung besser auszunutzen und ein Verfahren der eingangs genannten Art zu schaffen, das dem Fahrer die Ausführung einer Interaktion per Sprache anbietet und/oder ihn zu der Fortführung einer Sprachbedienung bewegt.

### Vorteile der Erfindung

Das erfindungsgemäße Verfahren gemäß Anspruch 1 weist gegenüber den bekannten Sprachbedienungsverfahren den Vorteil auf, dass der Benutzer bzw. Fahrer eines Kraftfahrzeugs in bestimmten Situationen zur Benutzung der Sprachbedienung animiert wird, was zu einer Erhöhung der Verkehrssicherheit führen kann. Die Anwendung des erfindungsgemäßen Verfahrens führt dazu, dass der Fahrer automatisch auf die Möglichkeit einer alternativen Sprachbedienung hingewiesen wird, um ihn so zu beeinflussen, dass er die Vorteile einer sichereren Sprachbedienung auch nutzt.

Die der vorliegenden Erfindung zugrunde liegende Idee besteht darin, dass dem Benutzer des sprachbedienbaren Gerätes oder Systems, insbesondere also dem Fahrer des Kraftfahrzeugs, in Abhängigkeit vom Vorliegen oder Nichtvorliegen bestimmter vordefinierter Bedingungen optisch und/oder akustisch und/oder haptisch signalisiert wird, dass eine Sprachbedienung des Gerätes oder Systems möglich ist.

Auf diese Weise wird ein einfach durchzuführendes Verfahren geschaffen, das mit vergleichsweise wenig Aufwand und verhältnismäßig geringen Kosten zu einer Steigerung der Verkehrsicherheit beitragen kann. Darüber hinaus können dem Fahrer auf diese Weise die Möglichkeiten der Sprachbedienung auch bei solchen Funktionen besser verdeutlicht werden, die er gewohnheitsmäßig oder aus Unkenntnis nicht per Sprache ausführt.

Vorteilhafte Weiterbildungen und Verbesserungen des erfindungsgemäßen Verfahrens ergeben sich aus den abhängigen Ansprüchen.

So ist es besonders vorteilhaft, wenn dem Benutzer die Möglichkeit einer Sprachbedienung dann signalisiert wird, wenn er eine nicht sprachgesteuerte Bedienung des Gerätes bzw. Systems vornimmt oder vorgenommen hat. Die erfindungsgemäß abzuprüfende Bedingung für die Ausgabe eines Hinweises liegt dabei im Verhalten des Benutzers bzw. Fahrers. Dadurch kann das erfindungsgemäße Verfahren den Fahrer auch beim Erlernen der verschiedenen Möglichkeiten einer Sprachbedienung besonders gut unterstützen.

Eine alternative oder ergänzende Variante des erfindungsgemäßen Verfahrens sieht vor, dass der Benutzer jedes Mal dann einen Hinweis auf die Möglichkeit einer Sprachbedienung erhält, wenn er ein sprachbedienbares Gerät bzw. System einschaltet und/oder wenn er das Kraftfahrzeugs startet.

Gemäß einer ersten besonders bevorzugten Ausführungsform der Erfindung ist vorgesehen, dass ein oder mehrere vorbestimmte Parameter des momentanen Zustandes und/oder Verhaltens des Benutzers erfasst und mit einem oder mehreren vordefinierten Parameterwerten verglichen wird bzw. werden, wobei dem Benutzer die Möglichkeit einer Sprachbedienung signalisiert wird, wenn mindestens ein erfasster Parameterwert den zugehörigen vordefinierten Vergleichs-Parameterwert erreicht oder übersteigt oder unterschreitet.

Derartig erfassbare Parameter zum Zustand oder Verhalten des Benutzers bzw. Fahrers können vorzugsweise Bewegungen der Augen und/oder des Kopfes sein. Diese Bewegungen können über separate Systeme, beispielsweise über Eye-Tracking-Systeme für andere Funktionen erfasst und zur Durchführung des erfindungsgemäßen Verfahrens mit verwendet werden. Dabei können häufige Hin- und Herbewegungen des Kopfes oder der Augen beispielsweise auf eine Situation hindeuten, in der er Knöpfe oder Schalter eines Gerätes oder Systems sucht, so dass eine Unterstützung des Fahrers durch einen Hinweis auf die Möglichkeiten einer Sprachbedienung sinnvoll sein kann.

Gemäß einer weiteren besonders bevorzugten Ausführungsform der Erfindung ist vorgesehen, dass ein oder mehrere vorbestimmte Parameter des momentanen Zustandes des Kraftfahrzeugs erfasst und mit einem oder mehreren vordefinierten Parameterwert verglichen wird bzw. werden, wobei dem Benutzer die Möglichkeit einer Sprachbedienung dann signalisiert wird, wenn mindestens ein erfasster Parameterwert den zugehörigen vordefinierten Vergleichs-Parameterwert erreicht oder übersteigt oder unterschreitet. Der Hinweis an den Benutzer wird also in Abhängigkeit von einem momentanen Fahrzustand gegeben. Dabei können auch die Fahrzustandparameter von Modulen geliefert werden, die für andere Funktionen des Kraftfahrzeugs vorgesehen sind.

Vorzugsweise können dabei die momentane Geschwindigkeit und/oder eine Durchschnittsgeschwindigkeit des Kraftfahrzeugs und/oder die Beschleunigung bzw. Verzögerung des Kraftfahrzeugs und/oder der momentane Lenkwinkel und/oder die Anzahl von Lenkwinkeländerungen in einem bestimmten Zeitraum als Parameter erfasst werden. Beispielsweise kann eine signifikant steigende Anzahl häufiger kleinerer Lenkwinkeländerungen ebenfalls auf eine Situation hindeuten, in der eine Unterstützung des Fahrers durch einen Hinweis auf die Möglichkeiten einer Sprachbedienung eines Gerätes oder Systems sinnvoll sein könnte.

Gemäß einer dritten bevorzugten Ausführungsform der Erfindung ist vorgesehen, dass ein oder mehrere vorbestimmte Parameter der momentanen Umgebung des Kraftfahrzeugs erfasst und mit einem oder mehreren vordefinierten Parameterwert verglichen wird bzw. werden, wobei dem Benutzer die Möglichkeit einer Sprachbedienung dann signalisiert wird, wenn mindestens ein erfasster Parameterwert den zugehörigen vordefinierten Vergleichs-Parameterwert erreicht oder übersteigt oder unterschreitet. Hierbei wird der Hinweis an den Benutzer in Abhängigkeit von einer momentanen Verkehrssituation gegeben.

Dabei kann vorzugsweise die Art und/oder der Verlauf und/oder die Beschaffenheit des momentan befahrenen Verkehrsweges und/oder die Vorbeifahrt an bestimmten Verkehrszeichen und/oder die aktuelle Verkehrsdichte als Parameter erfasst werden. So könnte beispielsweise auf Autobahnen oder beim Erfassen einer Geschwindigkeitsbegrenzung oder bei besonders hoher Verkehrsdichte, eine Situation vorliegen, in der ein Hinweis auf die Möglichkeiten einer Sprachbedienung eines Gerätes oder Systems zur Unterstützung des Fahrers sinnvoll sein kann.

Selbstverständlich können die drei vorgenannten Bedingungen zum Zustand des Fahrers, des Fahrzeugs bzw. der Umgebung des Fahrzeugs nicht nur einzeln, sondern auch gleichzeitig nebeneinander erfasst und daraufhin überprüft werden, ob ein erfindungsgemäßer Hinweis an den Fahrer ausgegeben werden soll.

Eine weitere Alternative besteht darin, dem Benutzer die Möglichkeit einer Sprachbedienung eines Gerätes oder Systems in Abhängigkeit von der Zeit, insbesondere in regelmäßigen Zeitabständen zu signalisieren.

Besonders vorteilhaft ist es ferner, wenn dem Benutzer bzw. Fahrer die Möglichkeit einer Sprachbedienung in einer Kommunikationsschnittstelle (HMI) akustisch durch die Ausgabe von gegebenenfalls auch in verschiedenen Sprachen vorgespeicherten Sprachsegmenten signalisiert wird. Dazu kann beispielsweise folgender Hinweis ausgegeben werden: "Bitte setzen sie die Eingabe sprachlich fort". Dadurch erhält der Fahrer direkt auch einen sinnvollen Einstieg in den Sprachdialog. Grundsätzlich kann der erfindungemäße Hinweis jedoch auch anders, beispielsweise durch Änderungen auf der Grafik-Eingabemaske ausgegeben werden. Auch kann dem Fahrer der Hinweis mittels optischer Anzeigemittel gegeben werden, die insbesondere durch eine in ein Kombiinstrument des Kraftfahrzeugs integrierte Anzeigevorrichtung gebildet sein können. Insbesondere kann dem Fahrer auch der Einstieg in die Sprachbedienung dadurch erleichtert werden, dass bei herkömmlicher Bedienung des Geräts oder Systems zusätzlich zu den visuellen Ausgaben parallel auch die entsprechenden Sprachausgaben der Sprachbedienung ausgegeben werden.

Die vorliegende Erfindung betrifft ferner eine Vorrichtung oder eine Anordnung, die zur Durchführung des erfindungsgemäßen Verfahrens geeignet ist. Besonders vorteilhaft ist es, wenn die Vorrichtung Speichermittel aufweist, in denen eine das erfindungsgemäße Verfahren ausführende Software speicherbar ist. In den Speichermitteln werden vorzugsweise auch die Vergleichsparameterwerte abgespeichert, die bei der Ausführung des Verfahrens zur Ermittlung der Bedingungen, unter denen ein Hinweis auf die Sprachbedienbarkeit erfolgen soll, benötigt werden.

Eine dem vorangehend beschriebenen Verfahren entsprechende Vorrichtung zur Unterstützung der Sprachsteuerung eines Gerätes oder eines Systems in einem Kraftfahrzeug umfasst vorzugsweise mindestens ein in oder an einem Kraftfahrzeug angeordnetes Gerät oder System, welches sowohl durch Spracheingaben als auch durch nicht-sprachliche Eingaben, insbesondere durch die Betätigung von Schaltern und/oder Knöpfen und/oder eines Touch-Screens, bedienbar ist, Mittel zum Erfassen mindestens eines Zustands des Fahrers und/oder des Kraftfahrzeugs und/oder der Umgebung des Kraftfahrzeugs, eine Speichereinrichtung zum Abspeichern vordefinierter Vergleichswerte, eine Vergleichseinheit zum Vergleichen der erfassten Zustandswerte mit den Vergleichswerten, sowie mit der Vergleichseinheit verbundene, vorzugsweise optisch und/oder akustisch wirkende Signalmittel, durch die dem Benutzer des Gerätes oder Systems, insbesondere dem Fahrer des Kraftfahrzeugs, in Abhängigkeit von den durch die Vergleichseinheit gelieferten Ergebnissen, signalisierbar ist, dass das Gerät oder System durch Sprachbedienung bedienbar ist.

Mit einer derartigen Vorrichtung kann der Fahrer bei dem Vorliegen oder Nichtvorliegen bestimmter vordefinierter Bedingungen oder Situationen bzw. bei dem Erreichen oder dem Übersteigen oder dem Unterschreiten der Vergleichswerte durch die erfassten Zustandswerte auf die Möglichkeiten einer Sprachbedienung hingewiesen werden. Vorteilhafterweise kann ein entsprechender Hinweis bei einer erfindungsgemäßen Vorrichtung oder Anordnung auch dann erfolgen, wenn der Fahrer eine herkömmliche Bedienung vornimmt, obwohl eine Sprachbedienung des bedienten Gerätes oder Systems möglich wäre. Wie bei dem zuvor beschriebenen Verfahren soll der Fahrer auch durch die erfindungsgemäße Vorrichtung zur vorteilhaften Nutzung der Sprachbedienung bewegt werden, um die Verkehrssicherheit zu erhöhen. Die erfindungsgemäße Vorrichtung ist bei verhältnismäßig geringem Aufwand kostengünstig ausführbar.

### Zeichnung

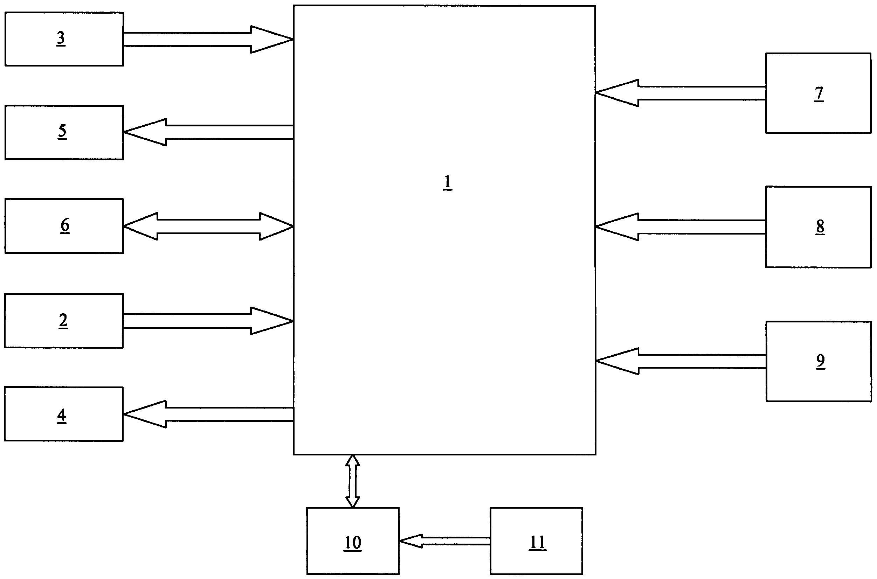

In der Zeichnung ist ein Ausführungsbeispiel der Erfindung dargestellt, das in der nachfolgenden Beschreibung näher erläutert wird. Die Zeichnung zeigt eine erfindungsgemäße Vorrichtung zur Unterstützung der Sprachsteuerung eines sowohl durch Spracheingaben als auch durch nicht-sprachliche Eingaben bedienbaren Systems in einem Kraftfahrzeug.

### Beschreibung des Ausführungsbeispiels

In der Figur ist ein Fahrerassistenzsystem 1 dargestellt, bei dem es sich beispielsweise um ein Navigationssystem zur Unterstützung des Fahrers beim Finden der bestmöglichen Fahrtstrecke handeln kann. Das System 1 kann einerseits in herkömmlicher Weise über Tasten, Knöpfe und/oder Schalter 2 sowie andererseits ergänzend hierzu auch über ein Spracherkennungsmodul 3 vom Fahrer bedient werden. Zur Ausgabe von Informationen ist das Fahrerassistenzsystem 1 mit einer Anzeigevorrichtung 4 in einem Kombiinstrument des Kraftfahrzeugs und mit einem Sprachausgabemodul 5 verbunden. Zusätzlich ist als weitere Benutzerschnittstelle (HMI = Human Machine Interface) ein Touchscreen 6 vorhanden, über den sowohl Informationen vom System 1 an den Fahrer ausgegeben werden als auch Eingaben vom Fahrer vorgenommen werden können. Ferner ist das System 1 zur Ausführung des erfindungemäßen Verfahrens mit Mitteln zum Erfassen mindestens eines Zustands 7 des Fahrers und mindestens eines Zustands 8 des Kraftfahrzeugs und mindestens eines Zustands 9 der Umgebung des Kraftfahrzeugs verbunden. Die hierdurch erfassten Zustandsparameter 7, 8 und 9 werden in einer mit dem Assistenzsystem 1 verbundenen Vergleichseinheit 10 mit bestimmten vordefinierten Vergleichswerten verglichen, die in einer Speichereinheit 11 abgespeichert sind. Beim Erreichen der vordefinierten Vergleichswerte und/oder beim Unterschreiten eines vorgegebenen oder einstellbaren Abstandes zu den vordefinierten Vergleichswerten erhält der Fahrer durch das Sprachausgabemodul 5, welches über das System 1 mit der Vergleichseinheit 10 verbunden ist, einen Hinweis darauf, dass er das Assistenzsystem 1 sinnvollerweise durch Spracheingaben bedienen kann bzw. soll.

Die Erfindung berücksichtig dabei die jeweilige Situation des Fahrers und/oder des Kraftfahrzeugs, um den Fahrer gerade dann zu unterstützen, wenn die Nutzung einer Sprachbedienung einen deutlichen Vorteil im Hinblick auf die Verkehrssicherheit bringt. Dies gilt vor allem in Situationen mit einer hohen Belastung für den Fahrer oder wenn eine erhöhte Aufmerksamkeit auf die eigentliche Fahraufgabe notwendig ist, insbesondere bei hoher Verkehrsdichte, oder wenn der Fahrer beispielsweise unaufmerksam oder müde ist.

Obwohl die vorliegende Erfindung hier lediglich anhand bevorzugter Ausführungsbeispiele beschrieben wurde, ist sie nicht darauf beschränkt, sondern in vielfältiger Weise modifizierbar. Insbesondere sind die abzuprüfenden Bedingungen bzw. Zustände 7, 8, 9 nicht auf die genannten Beispiele begrenzt, sondern sie können beliebige Zustände, Situationen und/oder Vorgänge umfassen. Auch kann der Benutzer des sprachbedienbaren Gerätes oder Systems 1 vom Fahrer des Kraftfahrzeugs verschieden sein.

## Patentansprüche

1. Verfahren zur Sprachsteuerung eines Gerätes oder eines Systems (1) in einem Kraftfahrzeug, wobei das Gerät oder das System (1) sowohl durch Spracheingaben (3) als auch durch nicht-sprachliche Eingaben, insbesondere durch die Betätigung von Schaltern (2) und/oder Knöpfen und/oder eines Touch-Screens (6), bedient werden kann, wobei dem Benutzer des Gerätes oder Systems (1), insbesondere dem Fahrer des Kraftfahrzeugs, in Abhängigkeit vom Vorliegen oder Nichtvorliegen bestimmter vordefinierter Bedingungen optisch und/oder akustisch und/oder haptisch signalisiert wird, dass eine Sprachbedienung (3) des Gerätes oder Systems (1) möglich ist, **dadurch gekennzeichnet , dass** mindestens ein vorbestimmter Parameter des Zustandes (7) oder des Verhaltens des Benutzers erfasst und mit mindestens einem vordefinierten Parameterwert verglichen wird, wobei dem Benutzer die Möglichkeit einer Sprachbedienung signalisiert wird, wenn mindestens ein erfasster Parameterwert mindestens einen vordefinierten Parameterwert erreicht oder übersteigt oder unterschreitet

2. Verfahren nach Anspruch 1, **dadurch gekennzeichnet, dass** dem Benutzer die Möglichkeit einer Sprachbedienung signalisiert wird, wenn er eine nicht sprachgesteuerte Bedienung des Geräts bzw. Systems (1) vornimmt oder vorgenommen hat

3. Verfahren nach Anspruch 1 oder 2, **dadurch gekennzeichnet, dass** dem Benutzer die Möglichkeit einer Sprachbedienung beim Einschalten des Gerätes bzw. Systems (1) oder beim Starten des Kraftfahrzeugs signalisiert wird.

4. Verfahren nach Anspruch 1, **dadurch gekennzeichnet, dass** die Augenbewegungen und/oder Kopfbewegungen des Benutzers, insbesondere des Fahrers, als Parameter erfasst werden.

5. Verfahren nach einem der vorherigen Ansprüche, **dadurch gekennzeichnet , dass** mindestens ein vorbestimmter Parameter des Zustandes (8) des Kraftfahrzeugs erfasst und mit mindestens einem vordefinierten Parameterwert verglichen wird, wobei dem Benutzer die Möglichkeit einer Sprachbedienung signalisiert wird, wenn mindestens ein erfasster Parameterwert mindestens einen vordefinierten Parameterwert erreicht oder übersteigt oder unterschreitet.

6. Verfahren nach Anspruch 5, **dadurch gekennzeichnet, dass** die momentane Geschwindigkeit und/oder eine Durchschnittsgeschwindigkeit und/oder die Beschleunigung bzw. Verzögerung des Kraftfahrzeugs und/oder der momentane Lenkwinkel und/oder die Anzahl von Lenkwinkeländerungen in einem bestimmten Zeitraum als Parameter erfasst werden.

7. Verfahren nach einem der vorherigen Ansprüche, **dadurch gekennzeichnet , dass** mindestens ein vorbestimmter Parameter der Umgebung oder des Zustands (9) der Umgebung des Kraftfahrzeugs erfasst und mit mindestens einem vordefinierten Parameterwert verglichen wird, wobei dem Benutzer die Möglichkeit einer Sprachbedienung signalisiert wird, wenn mindestens ein erfasster Parameterwert mindestens einen vordefinierten Parameterwert erreicht oder übersteigt oder unterschreitet.

8. VerfahrennachAnspruch7,**dadurch gekennzeichnet, dass** die Art und/oder der Verlauf und/oder die Beschaffenheit des momentan befahrenen Verkehrsweges und/oder Verkehrszeichen und/oder die Dichte des Verkehrs, in dem sich das Kraftfahrzeug befindet, als Parameter erfasst werden.

9. Verfahren nach einem der vorherigen Ansprüche, **dadurch gekennzeichnet , dass** dem Benutzer die Möglichkeit einer Sprachbedienung in regelmäßigen Zeitabständen signalisiert wird.

10. Verfahren nach einem der vorherigen Ansprüche, **dadurch gekennzeichnet, dass** dem Benutzer die Möglichkeit einer Sprachbedienung akustisch durch die Ausgabe (5) von Sprachsegmenten signalisiert wird.

11. Vorrichtung zur Unterstützung der Sprachsteuerung eines Gerätes oder eines Systems (1) in einem Kraftfahrzeug, **dadurch gekennzeichnet, dass** es zur Durchführung des Verfahrens nach einem der Ansprüche 1 bis 11 geeignet ist und Speichermittel umfasst, in denen ein dieses Verfahren ausführendes Computerprogramm gespeichert ist.

12. Vorrichtung zur Unterstützung der Sprachsteuerung eines Gerätes oder eines Systems (1) in einem Kraftfahrzeug, umfassend:
- mindestens ein in oder an einem Kraftfahrzeug angeordnetes Gerät oder System (1), welches sowohl durch Spracheingaben (3) als auch durch nicht-sprachliche Eingaben, insbesondere durch die Betätigung von Schaltern (2) und/oder Knöpfen und/oder eines Touch-Screens (6), bedienbar ist, **gekennzeichnet durch**
- Mittel zum Erfassen mindestens eines Zustands (7, 8, 9) des Fahrers und/oder des Kraftfahrzeugs und/oder der Umgebung des Kraftfahrzeugs,
- eine Speichereinrichtung (11) zum Abspeichern vordefinierter Vergleichswerte,
- eine Vergleichseinheit (10) zum Vergleichen der erfassten Zustandswerte (7, 8, 9) mit den Vergleichswerten,
- sowie mit der Vergleichseinheit (10) verbundene Signalmittel (4, 5, 6), **durch** die dem Benutzer des Gerätes oder Systems (1) in Abhängigkeit von den **durch** die Vergleichseinheit (10) gelieferten Ergebnissen, insbesondere bei dem Erreichen oder dem Übersteigen oder dem Unterschreiten der Vergleichswerte **durch** die erfassten Zustandswerte, signalisierbar ist, dass das Gerät oder System (1) durch Sprachbedienung (3) bedienbar ist.

## Claims

1. Method for the voice control of an appliance or a system (1) in a motor vehicle, wherein the appliance or the system (1) can be operated both by voice inputs (3) and by non-verbal inputs, particularly by operating switches (2) and/or buttons and/or a touchscreen (6), wherein the user of the appliance or system (1), particularly the driver of the motor vehicle, is provided with visual and/or audible and/or haptic signals on the basis of the presence or absence of particular predefined conditions to indicate that voice operation (3) of the appliance or system (1) is possible, **characterized in that** at least one predetermined parameter for the state (7) or the behaviour of the user is captured and is compared with at least one predefined parameter value, wherein the user is provided with signals to indicate the possibility of voice operation when at least one captured parameter value reaches or exceeds or drops below at least one predefined parameter value.

2. Method according to Claim 1, **characterized in that** the user is provided with signals to indicate the possibility of voice operation when he performs or has performed non-voice-controlled operation of the appliance or system (1).

3. Method according to Claim 1 or 2, **characterized in that** the user is provided with signals to indicate the possibility of voice operation when the appliance or system (1) is switched on or when the motor vehicle is started.

4. Method according to Claim 1, **characterized in that** the eye movements and/or head movements of the user, particularly of the driver, are captured as parameters.

5. Method according to one of the preceding claims, **characterized in that** at least one predetermined parameter for the state (8) of the motor vehicle is captured and is compared with at least one predefined parameter value, wherein the user is provided with signals to indicate the possibility of voice operation when at least one captured parameter value reaches or exceeds or drops below at least one predefined parameter value.

6. Method according to Claim 5, **characterized in that** the current speed and/or an average speed and/or the acceleration or deceleration of the motor vehicle and/or the current steering angle and/or the number of steering angle changes in a particular period are captured as parameters.

7. Method according to one of the preceding claims, **characterized in that** at least one predetermined parameter for the surroundings or for the state (9) of the surroundings of the motor vehicle is captured and is compared with at least one predefined parameter value, wherein the user is provided with signals to indicate the possibility of voice operation when at least one captured parameter value reaches or exceeds or drops below at least one predefined parameter value.

8. Method according to Claim 7, **characterized in that** the type and/or the course and/or the quality of the traffic route currently being used and/or road signs and/or the density of the traffic which the motor vehicle is in are captured as parameters.

9. Method according to one of the preceding claims, **characterized in that** the user is provided with signals to indicate the possibility of voice operation at regular intervals of time.

10. Method according to one of the preceding claims, **characterized in that** the user is provided with signals to indicate the possibility of voice operation audibly by virtue of the output (5) of voice segments.

11. Apparatus for assisting the voice control of an appliance or a system (1) in a motor vehicle, **characterized in that** it is suitable for carrying out the method according to one of Claims 1 to 10 and comprises memory means which store a computer program which performs said method.

12. Apparatus for assisting the voice control of an appliance or a system (1) in a motor vehicle, comprising:
- at least one appliance or system (1) which is arranged in or on a motor vehicle and which can be operated both by voice inputs (3) and by non-verbal inputs, particularly by operating switches (2) and/or buttons and/or a touchsscreen (6), **characterized by**
- means for capturing at least one state (7, 8, 9) of the driver and/or of the motor vehicle and/or of the surroundings of the motor vehicle,
- a memory device (11) for storing predefined comparison values,
- a comparison unit (10) for comparing the captured state values (7, 8, 9) with the comparison values,
- and signal means (4, 5, 6) which are connected to the comparison unit (10) and which can provide the user of the appliance or system (1) with signals on the basis of the results provided by the comparison unit (10), particularly when the captured state values reach or exceed or drop below the comparison values, to indicate that the appliance or system (1) can be operated by voice operation (3).

## Revendications

1. Procédé de commande vocale d'un appareil ou d'un système (1) dans un véhicule automobile, l'appareil ou le système (1) pouvant être utilisé aussi bien par des entrées vocales (3) que par des entrées non vocales, notamment en actionnant des commutateurs (2) et/ou des boutons et/ou un écran tactile (6), l'utilisateur de l'appareil ou du système (1), notamment le conducteur du véhicule automobile, se faisant signaler visuellement et/ou acoustiquement et/ou tactilement en fonction de la présence ou de l'absence de certaines conditions prédéfinies qu'une commande vocale (3) de l'appareil ou du système (1) est possible, **caractérisé en ce qu'**au moins un paramètre prédéterminé de l'état (7) ou du comportement de l'utilisateur est détecté et comparé avec au moins une valeur de paramètre prédéfinie, la possibilité d'une commande vocale étant signalée à l'utilisateur lorsqu'au moins une valeur de paramètre détectée est égale ou supérieure ou inférieure à au moins une valeur de paramètre prédéfinie.

2. Procédé selon la revendication 1, **caractérisé en ce que** la possibilité d'une commande vocale est signalée à l'utilisateur lorsqu'il procède ou a procédé à une utilisation non commandée par la voix de l'appareil ou du système (1).

3. Procédé selon la revendication 1 ou 2, **caractérisé en ce que** la possibilité d'une commande vocale est signalée à l'utilisateur lors de la mise sous tension de l'appareil ou du système (1) ou lors du démarrage du véhicule automobile.

4. Procédé selon la revendication 1, **caractérisé en ce que** les mouvements des yeux et/ou les mouvements de la tête de l'utilisateur, notamment du conducteur, sont détectés comme paramètres.

5. Procédé selon l'une des revendications précédentes, **caractérisé en ce qu'**au moins un paramètre prédéterminé de l'état (8) du véhicule automobile est détecté et comparé avec au moins une valeur de paramètre prédéfinie, la possibilité d'une commande vocale étant signalée à l'utilisateur lorsqu'au moins une valeur de paramètre détectée est égale ou supérieure ou inférieure à au moins une valeur de paramètre prédéfinie.

6. Procédé selon la revendication 5, **caractérisé en ce que** la vitesse momentanée et/ou la vitesse moyenne et/ou l'accélération ou le ralentissement du véhicule automobile et/ou l'angle de direction momentané et/ou le nombre de changements d'angle de direction pendant une période donnée sont détectés en tant que paramètres.

7. Procédé selon l'une des revendications précédentes, **caractérisé en ce qu'**au moins un paramètre prédéterminé de l'environnement ou de l'état (9) de l'environnement du véhicule automobile est détecté et comparé avec au moins une valeur de paramètre prédéfinie, la possibilité d'une commande vocale étant signalée à l'utilisateur lorsqu'au moins une valeur de paramètre détectée est égale ou supérieure ou inférieure à au moins une valeur de paramètre prédéfinie.

8. Procédé selon la revendication 7, **caractérisé en ce que** la nature et/ou le tracé et/ou la propriété de la voie de circulation momentanément empruntée et/ou les panneaux de circulation et/ou la densité du trafic dans lequel se trouve le véhicule automobile sont détectés en tant que paramètres.

9. Procédé selon l'une des revendications précédentes, **caractérisé en ce que** la possibilité d'une commande vocale est signalée à l'utilisateur à intervalles réguliers.

10. Procédé selon l'une des revendications précédentes, **caractérisé en ce que** la possibilité d'une commande vocale est signalée à l'utilisateur acoustiquement par la diffusion (5) de segments de parole.

11. Dispositif d'assistance à la commande vocale d'un appareil ou d'un système (1) dans un véhicule automobile, **caractérisé en ce qu'**il est conçu pour mettre en oeuvre le procédé selon l'une des revendications 1 à 10 et comprend des moyens de mémorisation dans lesquels est enregistré un programme informatique qui exécute ce procédé.

12. Dispositif d'assistance à la commande vocale d'un appareil ou d'un système (1) dans un véhicule automobile, comprenant :
- au moins un appareil ou un système (1) monté dans ou sur un véhicule automobile, lequel peut être utilisé aussi bien par des entrées vocales (3) que par des entrées non vocales, notamment en actionnant des commutateurs (2) et/ou des boutons et/ou un écran tactile (6), **caractérisé par**
- des moyens pour détecter au moins un état (7, 8, 9) du conducteur et/ou du véhicule automobile et/ou de l'environnement du véhicule automobile,
- un dispositif de mémorisation (11) pour mémoriser des valeurs comparatives prédéfinies,
- une unité de comparaison (10) pour comparer les valeurs d'état (7, 8, 9) détectées avec les valeurs comparatives,
- ainsi que des moyens de signalisation (4, 5, 6) reliés avec l'unité de comparaison (10), par lesquels il peut être signalé à l'utilisateur de l'appareil ou du système (1), en fonction des résultats fournis par l'unité de comparaison (10), notamment lorsque les valeurs d'état détectées sont égales ou supérieures ou inférieures aux valeurs comparatives, que l'appareil ou le système (1) peut être commandé par commande vocale (3).
